# DEMANDE DE BREVET EUROPEEN

(11) **EP 1 138 213 A1**
(43) Date de publication de la demande: **04.10.2001**
(21) Numéro de dépôt: 01400719.9
(22) Date de dépôt: 20.03.2001
(51) Int. Cl.: A23N 12/08

(54) **Appareil de torréfaction**

(30) Priorité: 21.03.2000 FR 0003581
(71) Demandeur: Makoa, 44115 Basse Goulaine (FR)
(72) Inventeur: Lecointre, Paul, 44115 Basse Goulaine (FR); Lecointre, Joelle, 44115 Basse Goulaine (FR)
(74) Mandataire: Dawidowicz, Armand

(57) **Abrégé**

L'invention concerne un appareil (1) de torréfaction du type comprenant au moins une enceinte (2) de torréfaction et des moyens (6) de chauffage du contenu de l'enceinte, ladite enceinte (2) étant munie d'au moins une ouverture (3) de vidange ménagée dans la partie inférieure de ladite enceinte pour permettre un vidage par gravité du contenu de l'enceinte (2), cette ouverture (3) étant munie d'un organe (4) d'obturation mû en déplacement par l'intermédiaire d'un organe (5) de commande fonctionnant à l'électricité.

Cet appareil (1) est caractérisé en ce que l'organe (4) d'obturation est rappelé en position ouverte de l'ouverture (3) de vidange de l'enceinte (2) de torréfaction sous l'effet de son propre poids ou sous l'effet d'un organe mécanique de rappel lorsque l'organe (5) de commande en déplacement dudit organe (4) d'obturation est hors tension.

Application : torréfacteurs de cafés pour restauration hors foyer.

## Description

La présente invention concerne un appareil de torréfaction notamment pour l'obtention de café torréfié.

La torréfaction du café est une étape indispensable dans l'élaboration du café. Il s'agit d'un traitement par la chaleur du café vert qui produit des modifications physiques et chimiques fondamentales dans la structure et la composition du café entraînant un brunissement de celui-ci ainsi que l'apparition et le développement des caractéristiques organoleptiques du café dit torréfié. Cette torréfaction est également appliquée pour d'autres produits comme le cacao et la chicorée.

Le procédé de torréfaction actuel consiste à chauffer à sec le café vert jusqu'à ce qu'il présente les caractéristiques de torréfaction recherchées. Les moyens de chauffage peuvent être divers et variés. Ainsi, on connaît :
- des moyens de chauffage par infrarouge comme le décrit la demande internationale PCT DE 94.01458,
- des moyens de chauffage par passage à travers un flux chauffé comme le décrit la demande internationale WO 84.01271,
- des moyens de chauffage avec de la vapeur sous pression.

Le café torréfié perdant rapidement sa fraîcheur, il est devenu nécessaire ces dernières années de développer des appareils aptes à torréfier de petites quantités de cafés dans le cadre d'utilisation domestique, en particulier chez les cafetiers et les restaurateurs. Le développement de ces appareils autonomes mis à disposition d'un personnel peu disponible nécessite de développer une conception d'appareil qui écarte tout risque d'accident, en particulier en cas de dysfonctionnement de l'appareil ou en cas de panne générale d'électricité.

Un but de la présente invention est de proposer un appareil de torréfaction apte à torréfier de petites quantités de café, cet appareil étant entièrement autonome et ne nécessitant pas pour son fonctionnement la présence de personnel.

A cet effet, l'invention a pour objet un appareil de torréfaction du type comprenant au moins une enceinte de torréfaction et des moyens de chauffage du contenu de l'enceinte, ladite enceinte étant munie d'au moins une ouverture de vidange de l'enceinte ménagée dans la partie inférieure de ladite enceinte pour permettre un vidage par gravité du contenu de l'enceinte, cette ouverture étant munie d'un organe d'obturation mû en déplacement par l'intermédiaire d'un organe de commande fonctionnant à l'électricité, caractérisé en ce que l'organe d'obturation est rappelé en position ouverte de l'ouverture de vidange de l'enceinte de torréfaction sous l'effet de son propre poids ou sous l'effet d'un organe mécanique de rappel lorsque l'organe de commande en déplacement dudit organe d'obturation est hors tension.

Grâce à la conception de l'appareil, l'ouverture de vidange de l'ensemble de torréfaction est amenée automatiquement en position ouverte lorsqu'il est constaté une panne générale d'électricité et/ou un dysfonctionnement de l'appareil.

La mise hors tension de l'organe de commande peut s'opérer de manière accidentelle ou volontaire. En effet, selon une forme de réalisation préférée de l'invention, l'alimentation électrique de l'organe de commande en déplacement de l'organe d'obturation de l'ouverture de vidange de l'enceinte de torréfaction est asservie à une unité pilotant l'ensemble des fonctions de l'appareil de torréfaction nécessaires au processus de torréfaction de sorte que, dès qu'un dysfonctionnement pouvant nuire dans le temps au processus de torréfaction est détecté, la mise hors tension de l'organe de commande est opérée.

Selon une autre forme de réalisation préférée de l'invention, l'enceinte de torréfaction affecte sensiblement la forme d'une sphère.

En effet, pour limiter tout risque d'accident, en particulier d'incendie, et pour faciliter le processus de torréfaction, les inventeurs ont constaté que l'une des formes de réalisation préférée de l'enceinte était une forme sphérique, cette forme permettant, parallèlement à une vidange rapide et complète de l'enceinte, un brassage aisé du contenu de cette dernière sans risque de grillage des grains.

L'invention sera bien comprise à la lecture de la description suivante d'exemples de réalisation, en référence aux dessins annexés dans lesquels :

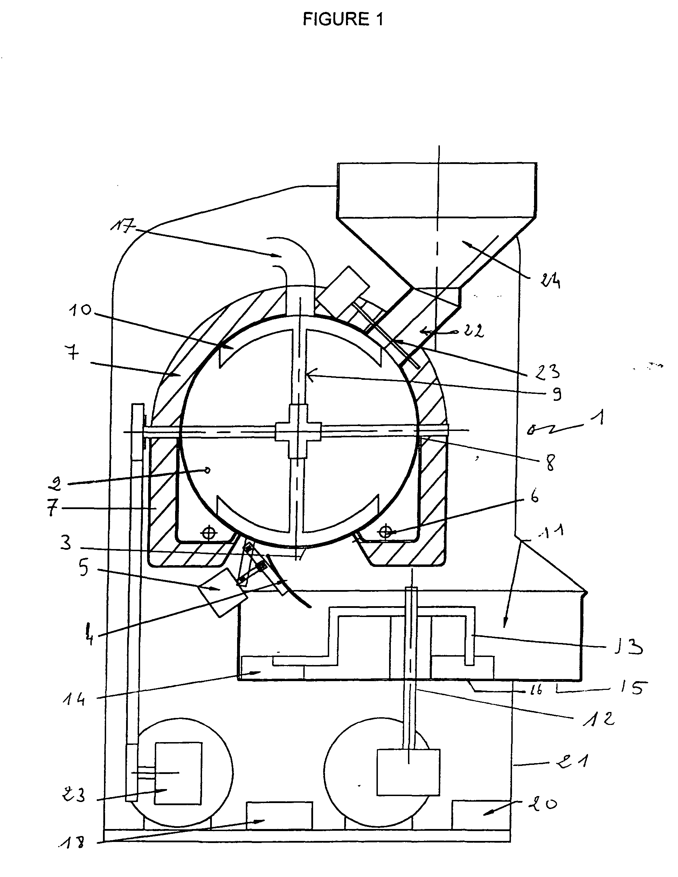

la figure 1 représente une vue schématique partielle d'un appareil de torréfaction ;

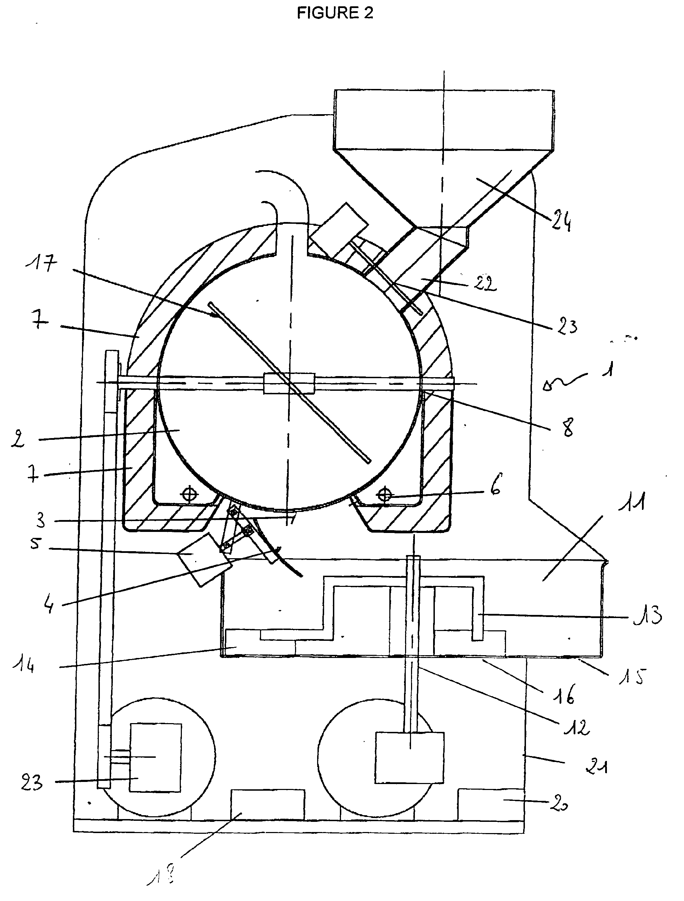

la figure 2 représente une autre vue schématique partielle de l'appareil de torréfaction en vue de profil des pales et

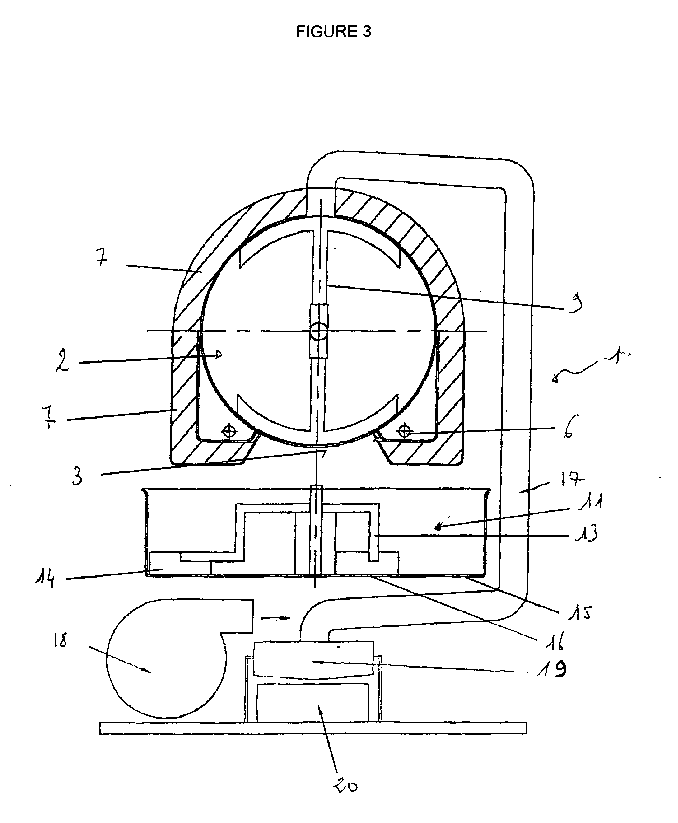

la figure 3 représente une autre vue schématique partielle de l'appareil de torréfaction conforme à l'invention avec le détail du dispositif d'évacuation des fumées.

L'appareil 1 de torréfaction, objet de l'invention, comprend, de manière en soi connue, au moins une enceinte 2 de torréfaction et des moyens 6 de chauffage du contenu de l'enceinte. Cette enceinte 2 de torréfaction est munie d'au moins une ouverture 22 de remplissage de l'enceinte 2 et d'au moins une ouverture 3 de vidange de l'enceinte 2.

L'ouverture 3 de vidange de l'enceinte 2 est ménagée dans la partie inférieure de l'enceinte pour permettre un vidage par gravité du contenu de l'enceinte 2. Dans les exemples représentés, cette ouverture 3 est traversée par l'axe vertical médian de l'enceinte 2. Dans l'exemple décrit, cette ouverture 3 de vidange est munie d'un organe 4 d'obturation mû en déplacement par l'intermédiaire d'un organe 5 de commande fonctionnant à l'électricité. Cet organe 5 de commande peut par exemple être constitué par un micro-moteur ou un électro-aimant. L'organe 4 d'obturation, constitué par exemple par une trappe, est rappelé en position ouverte de l'ouverture 3 de vidange de l'enceinte 2 de torréfaction sous l'effet de son propre poids ou sous l'effet d'un organe mécanique de rappel, tel qu'un ressort, lorsque l'organe 5 de commande en déplacement dudit organe d'obturation est hors tension. La mise hors de tension de cet organe 5 de commande peut être volontaire ou accidentelle. Elle sera accidentelle dans le cas d'une panne générale de courant survenant au cours d'un cycle de torréfaction. Dans ce cas, la mise hors tension de l'ensemble de l'appareil déclenchera automatiquement la mise hors tension de l'organe 5 de commande, ce qui aura pour conséquence l'ouverture automatique de l'enceinte 2 de cuisson de manière à ne pas provoquer par inertie due à la cuisson un incendie à l'intérieur de l'enceinte 2 de cuisson ou un endommagement du contenu de l'enceinte 2.

Cette mise hors tension pourra être encore provoquée de manière volontaire notamment lors de la détection d'un incident dans l'appareil de torréfaction au cours d'un cycle de torréfaction, cet incident pouvant être du à une défaillance de l'horloge contrôlant le temps de chauffe, aux moyens de chauffage générant une température supérieure à celle normalement prévue ou à la défaillance d'autres organes tels que par exemple l'organe 5 de commande lui-même agissant sur l'organe 4 d'obturation

Il sera décrit plus en détail ci-après l'ensemble des incidents pouvant survenir et agir sur la mise hors tension dudit organe 5 de commande. En effet, l'alimentation électrique de l'organe 5 de commande en déplacement de l'organe 4 d'obturation de l'ouverture 3 de vidange de l'enceinte 2 de torréfaction peut être asservie à une unité pilotant l'ensemble des fonctions de l'appareil de torréfaction nécessaires au processus de torréfaction. Cette unité est constituée par une carte électronique dont les missions sont de commander la mise en route et l'arrêt des différents organes constitutifs de l'appareil de torréfaction et de détecter les dysfonctionnements.

L'enceinte 2 de torréfaction comporte encore une ouverture 22 d'alimentation de l'enceinte 2, cette ouverture 22 étant fermée par une trappe 23 d'alimentation commandée en fonctionnement au moyen d'un micro-moteur. En amont de cette trappe 23 par rapport à ladite enceinte 2, est disposée une trémie 24 en forme d'entonnoir à l'intérieur de laquelle la dose de café à torréfier est introduite. La quantité de produit à torréfier est généralement fixe de telle sorte que la température de chauffage et la durée de chauffe pourront être constantes. Ceci permet, pour une chauffe constante et une quantité de produit constante, de déterminer par simple temporisation la fin de cuisson quelle que soit la matière première utilisée. Ce temps nécessaire à la cuisson peut être reprogrammé en fonction du produit utilisé.

Comme cela a été mentionné ci-dessus, l'appareil doit pouvoir être entièrement autonome, c'est-à-dire qu'en cas de panne de l'appareil, telle qu'une panne de courant ou un arrêt du moto-réducteur entraînant un arrêt du dispositif de brassage qui sera décrit ci-après, une surchauffe, etc., le produit ne doit pas demeurer dans l'enceinte de torréfaction au risque de brûler, de dégager des mauvaises odeurs ou de provoquer un incendie. L'émission d'un simple signal sonore ou lumineux ne pourrait suffire du fait que le personnel auquel cet appareil est destiné, à savoir notamment le cafetier ou le restaurateur, doit avant tout gérer sa clientèle. En conséquence, outre le fonctionnement de l'organe 4 d'obturation de l'ouverture 3 de vidange de l'enceinte 2 de torréfaction, la forme de l'enceinte 2 de torréfaction devient dans ce cas primordiale. Ainsi, de préférence, l'enceinte de torréfaction affecte sensiblement la forme d'une sphère. Cette sphère permet une évacuation totale et complète par simple gravité du contenu de l'enceinte. Cette sphère est simple à fabriquer et permet un brassage homogène du produit comme on pourra le constater lors de la description du dispositif de brassage. En pratique, cette enceinte 2 de torréfaction stationnaire est généralement constituée de deux demi-sphères assemblées comportant dans la partie inférieure de la sphère ainsi constituée une trappe 4 de vidange actionnée par un micro-moteur ou un électro-aimant. Lorsque ce micro-moteur est sous tension, il maintient la trappe 4 fermée. En cas de panne de l'alimentation, le micro-moteur ou l'électro-aimant n'est plus sous tension, la trappe 4 de vidange s'ouvre et libère le contenu de l'enceinte 2 par simple gravité. Généralement, la demi-sphère supérieure est percée d'un trou de diamètre 40 mm à 45° constituant l'ouverture de remplissage de l'enceinte 2 tandis que la demi-sphère inférieure est percée d'un trou de diamètre 65 mm pour la vidange du contenu de la sphère.

Pour permettre le chauffage du contenu de l'enceinte, l'enceinte 2 de torréfaction est logée à l'intérieur d'une chambre 7 d'isolation thermique. Les moyens 6 de chauffage de l'enceinte 2 sont disposés dans la chambre 7 isolée thermiquement de manière à chauffer l'air entourant l'enceinte 2 de torréfaction. Ces moyens 6 de chauffage peuvent être constitués par une simple résistance électrique. La chambre 7 d'isolation peut quant à elle être constituée par une virole rapportée sur la sphère constitutive de l'enceinte 2 de torréfaction.

Pour éviter le piquage et/ou le grillage du contenu de l'enceinte 2 de torréfaction, il est nécessaire de brasser le contenu de l'enceinte au cours de la cuisson. A cet effet, l'enceinte 2 de torréfaction est munie d'un arbre 8 rotatif sensiblement horizontal s'étendant entre deux points diamétralement opposés de l'enceinte 2. Cet arbre 8 rotatif est équipé de bras 9 porte-pales 10 à disposition rayonnante autour dudit arbre 8. Chaque pale 10, sensiblement en forme d'arc, forme un angle voisin de 45° avec l'arbre 8 rotatif. Au moins une partie des pales 10 sont écartées de l'arbre 8 rotatif d'une distance voisine du rayon de l'enceinte 2 de torréfaction pour râcler la paroi interne de l'enceinte 2 au cours de la rotation de l'arbre 8. Ces pales 10 permettent donc d'éviter au contenu de l'enceinte 2 de brûler par contact prolongé avec les parois chaudes. Il est généralement prévu une deuxième paire de pales réglées à mi-distance de la surface interne de la sphère et du centre, ces pales servant à brasser l'ensemble de la masse par un mélange régulier du contenu de l'enceinte 2. L'orientation des paires de pales à 45° par rapport à l'arbre horizontal permet de ne pas retenir d'éléments tels que des grains contenus dans l'enceinte au moment de la vidange de l'enceinte et d'envoyer les grains de part et d'autre de l'axe vertical médian de la sphère pour optimiser le brassage. L'arbre 8 rotatif est généralement entraîné à une vitesse de rotation de l'ordre de 50 tours par minute. La coopération de ce dispositif de brassage avec les moyens 6 de chauffage qui chauffent l'air entourant la sphère permet en outre d'éviter des points de surchauffe de la face externe de la sphère, points de surchauffe qui seraient de nature à endommager le contenu de l'enceinte de torréfaction.

Cet appareil de torréfaction comporte encore une enceinte 11 de refroidissement positionnée sous l'ouverture 3 de vidange obturable de l'enceinte 2 de torréfaction pour permettre un transfert automatique par gravité du contenu de l'enceinte 2 de torréfaction dans l'enceinte 11 de refroidissement à l'état ouvert de l'ouverture 3 de vidange de l'enceinte 2 de torréfaction. Le dispositif de refroidissement de l'enceinte 11 est constitué d'un arbre 12 rotatif généralement vertical équipé de bras 13 radiaux porte pales 14, les pales 14 étant agencées pour râcler le fond de l'enceinte 11 de refroidissement. Dans les exemples représentés, l'enceinte 11 de refroidissement affecte sensiblement la forme d'un cylindre ouvert sur sa face du dessus, les pales 14 s'étendant sensiblement perpendiculairement à la face formant fond du cylindre.

Au moins une partie du fond de l'enceinte 11 de refroidissement est perforée 15 pour permettre une élimination automatique de déchets tels que des pellicules enveloppant les grains de café grillés. Cette enceinte 11 de refroidissement est encore munie en façade d'une trappe 16 rappelée élastiquement en position de fermeture pour permettre, lors d'un actionnement commandé manuellement du dispositif de refroidissement de l'enceinte 11, la vidange du contenu de l'enceinte 11 à travers ladite trappe 16. Ce fonctionnement de la trappe 23 de l'enceinte 11 en coopération avec un actionnement manuel du dispositif de refroidissement empêche tout risque d'accident lors de la vidange de l'enceinte, les deux mains de l'utilisateur étant occupées à actionner un organe de telle sorte que les doigts ne peuvent pas être placés au contact des pales 14.

L'enceinte 2 de torréfaction comporte encore un conduit 17 d'évacuation des fumées à travers lequel les fumées sont aspirées par l'intermédiaire d'un ventilateur 18, ce conduit 17 d'évacuation des fumées débouchant dans une chambre 19 de condensation des fumées couplée à un tiroir 20 extractible de récupération des condensats. Le ventilateur 18 est positionné à l'extrémité du conduit d'extraction de fumée au voisinage de la chambre 19 de condensation des fumées. Ce conduit, d'une longueur de 70 cm environ, est isolé dans sa partie haute puis laissé à l'air ambiant pour provoquer une condensation des fumées et en limiter les dégagements. Comme les condensats sont récupérés au niveau du socle de l'appareil dans un tiroir 20 amovible positionné sur le devant de l'appareil, l'utilisateur peut aisément vider et nettoyer ce tiroir par simple passage au lave-vaisselle. Les vapeurs résiduelles sont quant à elles dispersées par l'arrière de l'appareil dans la partie haute après filtration sur un filtre à graisse. En effet, l'ensemble des éléments constitutifs de l'appareil de torréfaction décrits ci-dessus, à savoir l'enceinte 2 de torréfaction, l'enceinte 11 de refroidissement et le dispositif d'évacuation des fumées, sont logés à l'intérieur d'un carter 21, la trappe 16 de vidange de l'enceinte 11 de refroidissement et le tiroir 20 de récupération des condensats étant quant à eux disposés en façade du carter 21 pour pouvoir être accessibles à l'opérateur.

Le cycle de torréfaction d'un tel appareil est le suivant. Dans une première phase, après chargement de la trémie 24 disposée en amont de l'ouverture 22 d'alimentation de l'enceinte 2 de torréfaction d'une quantité déterminée de café, généralement 1,2 kg de café, la résistance chauffante de la sphère 2 de torréfaction est mise en route. L'organe 5 de commande de l'organe 4 d'obturation de l'ouverture 3 de vidange de l'enceinte 2 de torréfaction est actionné pour commander la fermeture de l'ouverture 3 de vidange de l'enceinte 2 de torréfaction. L'arbre 8 rotatif s'étendant à l'intérieur de l'enceinte 2 de torréfaction est entraîné en rotation par exemple au moyen d'un moto-réducteur 23 de telle sorte que le dispositif de brassage commence à fonctionner. Lorsque la température atteint sensiblement 220°C, l'organe, tel qu'un micro-moteur, de commande de l'ouverture, respectivement de la fermeture de l'ouverture 22 de remplissage de l'enceinte 2 de torréfaction, est actionné pour permettre le déversement du contenu de la trémie 24 dans l'enceinte 2 de torréfaction. Le café descend donc dans l'enceinte de torréfaction en l'espace de quelques secondes. Le micro-moteur est donc actionné en sens inverse pour provoquer la fermeture de l'ouverture 22 d'alimentation en grains de l'enceinte 2 de torréfaction. Le système de condensation des vapeurs de cuisson est alors mis en route. Dans une troisième phase, c'est-à-dire sensiblement après 25 minutes de cuisson, la résistance chauffante est arrêtée. L'entraînement en rotation de l'arbre 12 porte pales 14 équipant l'enceinte 11 de refroidissement est mis en route. L'organe 5 de commande de l'ouverture 3 de vidange de l'enceinte 2 de torréfaction est actionné dans le sens d'une ouverture de ladite enceinte pour permettre le transfert des grains torréfiés dans l'enceinte 11 de refroidissement. Quelques minutes après l'évacuation du contenu de l'enceinte 2 de torréfaction, le dispositif de brassage interne à l'enceinte 2 de torréfaction est arrêté. La dernière phase concerne le refroidissement des grains. Après quelques minutes dans l'enceinte 11 de refroidissement, les pales 14 du dispositif de brassage du refroidisseur sont arrêtées. La ventilation est également arrêtée. Un signal indique la fin de cuisson. L'opérateur aura donc juste à intervenir pour vider le dispositif de refroidissement par action manuelle simultanée sur les pales 14 du dispositif de brassage de l'enceinte 11 de refroidissement et sur la trappe 16 de vidange de l'enceinte de refroidissement qu'il devra maintenir ouverte au moyen d'une de ses mains. L'opérateur n'intervient donc à aucun moment au cours du cycle de torréfaction.

Comme cela a été précisé ci-dessus, le fonctionnement d'un tel appareil est exempt de tout risque même en cas de panne. En effet, par exemple si la résistance de chauffage génère une surchauffe, un bilame équipé d'une alimentation indépendante du circuit électrique met en rupture l'alimentation générale de telle sorte que l'enceinte 2 de torréfaction se vidange automatiquement. Si l'appareil n'est pas alimenté en électricité, notamment au cours d'un processus de torréfaction, en raison d'une panne générale d'électricité, à nouveau l'enceinte 2 de torréfaction est automatiquement vidangée par ouverture de l'ouverture 3 de vidange. S'il est constaté que la résistance ne chauffe pas au début d'un cycle, l'ouverture 22 de remplissage de l'enceinte 2 de torréfaction n'est pas ouverte. Si les pales 10 de brassage s'arrêtent dans l'enceinte 2 de torréfaction, l'ouverture 3 de vidange de l'enceinte 2 de torréfaction est automatiquement ouverte. L'appareil de torréfaction ainsi décrit est donc entièrement autonome et évite à l'opérateur d'avoir à surveiller un cycle de torréfaction.

## Revendications

1. Appareil (1) de torréfaction du type comprenant au moins une enceinte (2) de torréfaction et des moyens (6) de chauffage du contenu de l'enceinte, ladite enceinte (2) étant munie d'au moins une ouverture (3) de vidange ménagée dans la partie inférieure de ladite enceinte pour permettre un vidage par gravité du contenu de l'enceinte (2), cette ouverture (3) étant munie d'un organe (4) d'obturation mû en déplacement par l'intermédiaire d'un organe (5) de commande fonctionnant à l'électricité,
**caractérisé en ce que** l'organe (4) d'obturation est rappelé en position ouverte de l'ouverture (3) de vidange de l'enceinte (2) de torréfaction sous l'effet de son propre poids ou sous l'effet d'un organe mécanique de rappel lorsque l'organe (5) de commande en déplacement dudit organe (4) d'obturation est hors tension.

2. Appareil (1) de torréfaction selon la revendication 1,
**caractérisé en ce que** l'alimentation électrique de l'organe (5) de commande en déplacement de l'organe (4) d'obturation de l'ouverture (3) de vidange de l'enceinte de torréfaction est asservie à une unité pilotant l'ensemble des fonctions de l'appareil de torréfaction nécessaires au processus de torréfaction.

3. Appareil (1) de torréfaction selon l'une des revendications 1 et 2,
**caractérisé en ce que** l'enceinte de torréfaction affecte sensiblement la forme d'une sphère.

4. Appareil (1) de torréfaction selon l'une des revendications 1 à 3,
**caractérisé en ce que** l'enceinte (2) de torréfaction est munie d'un arbre (8) rotatif sensiblement horizontal s'étendant entre deux points diamétralement opposés de l'enceinte (2), cet arbre (8) rotatif étant équipé de bras (9) porte pales (10) à disposition rayonnante autour dudit arbre (8), chaque pale (10), sensiblement en forme d'arc, formant un angle voisin de 45° avec ledit arbre (8) rotatif.

5. Appareil (1) de torréfaction selon la revendication 4,
**caractérisé en ce qu'**au moins certaines des pales (10) sont écartées de l'arbre (8) rotatif d'une distance voisine du rayon de l'enceinte (2) de torréfaction pour râcler la paroi interne de ladite enceinte (2) au cours de la rotation de l'arbre (8).

6. Appareil (1) de torréfaction selon l'une des revendications 1 à 5,
**caractérisé en ce que** l'enceinte (2) de torréfaction est logée à l'intérieur d'une chambre (7) d'isolation thermique, les moyens (6) de chauffage de l'enceinte étant disposés dans ladite chambre (7) isolée thermiquement de manière à chauffer l'air entourant l'enceinte (2) de torréfaction.

7. Appareil (1) de torréfaction selon l'une des revendications 1 à 6,
**caractérisé en ce qu'**il comporte en outre une enceinte (11) de refroidissement positionnée sous l'ouverture (3) de vidange obturable de l'enceinte (2) de torréfaction pour permettre un transfert automatique par gravité du contenu de l'enceinte (2) de torréfaction dans l'enceinte (11) de refroidissement à l'état ouvert de l'ouverture (3) de vidange de l'enceinte (2) de torréfaction, le dispositif de refroidissement de l'enceinte étant constitué d'un arbre (12) rotatif généralement vertical équipé de bras (13) radiaux porte pales (14), les pales (14) étant agencées pour râcler le fond de l'enceinte (11) de refroidissement.

8. Appareil (1) de torréfaction selon la revendication 7,
**caractérisé en ce qu'**au moins une partie du fond de l'enceinte (11) de refroidissement est perforée (15) pour permettre une élimination automatique de déchets tels que des pellicules enveloppant les grains de café grillés.

9. Appareil (1) de torréfaction selon l'une des revendications 7 et 8,
**caractérisé en ce que** l'enceinte (11) de refroidissement est munie en façade d'une trappe (16) rappelée élastiquement en position de fermeture pour permettre, lors d'un actionnement commandé manuellement du dispositif de refroidissement de l'enceinte (11), la vidange du contenu de l'enceinte (11) à travers ladite trappe (16).

10. Appareil (1) de torréfaction selon l'une des revendications 1 à 9,
**caractérisé en ce que** l'enceinte (2) de torréfaction comporte un conduit (17) d'évacuation des fumées à travers lequel les fumées sont aspirées par l'intermédiaire d'un ventilateur (18), ce conduit (17) d'évacuation des fumées débouchant dans une chambre (19) de condensation des fumées couplée à un tiroir (20) extractible de récupération des condensats.

11. Appareil (1) de torréfaction selon l'une des revendications 9 et 10,
**caractérisé en ce que** l'ensemble des éléments constitutifs de l'appareil de torréfaction sont logés à l'intérieur d'un carter (21), la trappe (16) de vidange de l'enceinte (11) de refroidissement et le tiroir (20) de récupération des condensats étant disposés en façade du carter (21) pour pouvoir être accessibles à l'opérateur.
